# EUROPEAN PATENT SPECIFICATION

(11) **EP 2 102 586 B1**
(45) Date of publication and mention of the grant of the patent: **08.01.2020**
(21) Application number: 07847902.9
(22) Date of filing: 06.12.2007
(51) Int. Cl.: G01B 11/24, G01B 11/245, B23C 3/35, G06K 9/20, E05B 19/00

(54) **METHOD AND APPARATUS FOR READING A KEY PROFILE**
VERFAHREN UND VORRICHTUNG ZUM LESEN EINES SCHLÜSSELPROFILS
PROCÉDÉ ET APPAREIL PERMETTANT DE LIRE UN PROFIL DE CLÉ

(30) Priority: 14.12.2006 IT VE20060079
(43) Date of publication of application: 23.09.2009
(73) Proprietor: SILCA S.p.A., 31029 Vittorio Veneto (IT)
(72) Inventor: ANDREOLA, Renato, 35012 CAMPOSAMPIERO (IT)
(74) Representative: Piovesana, Paolo
(86) International application number: PCT/EP2007/063425
(87) International publication number: WO 2008/071619

(56) References cited:
- EP-B1- 1 163 626
- CA-A1- 2 353 165
- FR-A- 2 489 535
- US-A- 4 899 391
- US-A- 6 064 747
- US-A- 6 065 911
- US-B1- 6 175 638
- US-B1- 6 449 381
- US-B1- 6 543 972

## Description

The present invention relates to a method and apparatus for reading a key profile.

Apparatus for reading key profiles are known. One of these is described in EP1163626 of the same applicant. It uses the principle of striking the key shank with a laminar laser light beam, such as to generate on the shank a luminous line reproducing the key profile, and to read this luminous line by a sensor, the optical axis of which is inclined to the axis of the laser light beam.

As the profile of the notched key is not identical in each section of the key shank, the reading is effected along the entire shank, which is made to move axially during reading.

This solution has proved particularly valid, but at the same time has demonstrated certain limits, which the present invention proposes to eliminate.

One of these limits is the reading time which is fairly lengthy, given the need to scan the shank along its entire length.

Another limit is a certain constructional complexity of the apparatus, which must necessarily comprise moving parts.

Another limit is a certain laboriousness in the operation involved in positioning the key for effecting the reading, because of the necessary accuracy required in this positioning.

Another limit is the "blinding" effect of the key, if made of a particularly reflecting material, and the consequent poor definition of the luminous line.

Another known apparatus for reading a key profile is described in EP999916. This is based on the principle of reading the key profile by a mechanical feeler or by a pointed laser measurement device for measuring the distance of the various points on the key shank, or again by means of a light blade. However in addition to presenting the limits of the previously described known apparatus, this apparatus also presents reading limits in that it cannot read vertical walls and certainly not undercut walls; it also presents measurement errors related to the diameter of the feeler used.

Another known apparatus operating on a principle substantially analogous to that used in the apparatus of EP1163626 is described in US6406227.

Another known apparatus, described in US6449381, is based on the principle of using, for determining a key profile, the different behaviour of light incident on the non-milled surface and on a milled groove of the key shank. The apparatus is able to reconstruct the key profile on the basis of this different behaviour and of suitable software.

Drawbacks of this known solution are the low accuracy of the reading because of the lack of a clear difference between the behaviour of the light on the milled surface and on the non-milled surface of the key shank, and reading limitations in the sense that to obtain reliable responses large non-milled surfaces are required.

Another known apparatus for reading a key profile is described in Canadian patent 2353165. This is based on the principle of reading from the top the inner end of the notches provided in the key profile, i.e. that end of these notches close to the key head, at which the notch depths reduce progressively to zero. Using suitable algorithms the key profile can be obtained from the shape of this inner end of the notches.

A drawback of this known solution is the strict dependence between the shape of the end of these notches and the diameter of the milling cutter which has produced them. Moreover the reading requires for its reliability a distinct shape of the end of these notches, and again in this case the reading presents considerable inaccuracies.

US 6 175 638 describes a device for acquiring the image of a key profile comprising a chamber illuminated inside, a wall of which being closed by a translucent screen, in which the image of the shadow of the profile of the key shank is formed, which has been introduced in said chamber till its end touches said screen. The device also comprises a scanner, which picks up the image of said shadow and transmits it to a computer for its subsequent elaboration. FR-A-2 489 535 discloses a device for imaging a key profile.

An object of the invention is to eliminate all the drawbacks found in the state of the art, and hence enable a key profile to be read in a static, precise and rapid manner.

Another object of the invention is to conduct the key profile reading in a manner such that it can be integrated with the reading of its notching pattern.

Another object of the invention is to conduct the key profile reading in a manner independent of whether it is a flat key, a bitted key, a double bitted key or a pump key.

Another object of the invention is to conduct the key profile reading in a manner which does not require rigorous positioning of the key.

Another object of the invention is to conduct the key profile reading in a manner which also enables its thickness to be determined.

Another object of the invention is to achieve all these objects with a simple and relatively low-cost apparatus.

These and further objects which will be apparent from the ensuing description are attained by a method for reading a key profile as described in claim 1.

The described method is implemented by an apparatus as described in claim 9.

A preferred embodiment of the present invention is further described hereinafter with reference to the accompanying drawings, in which:

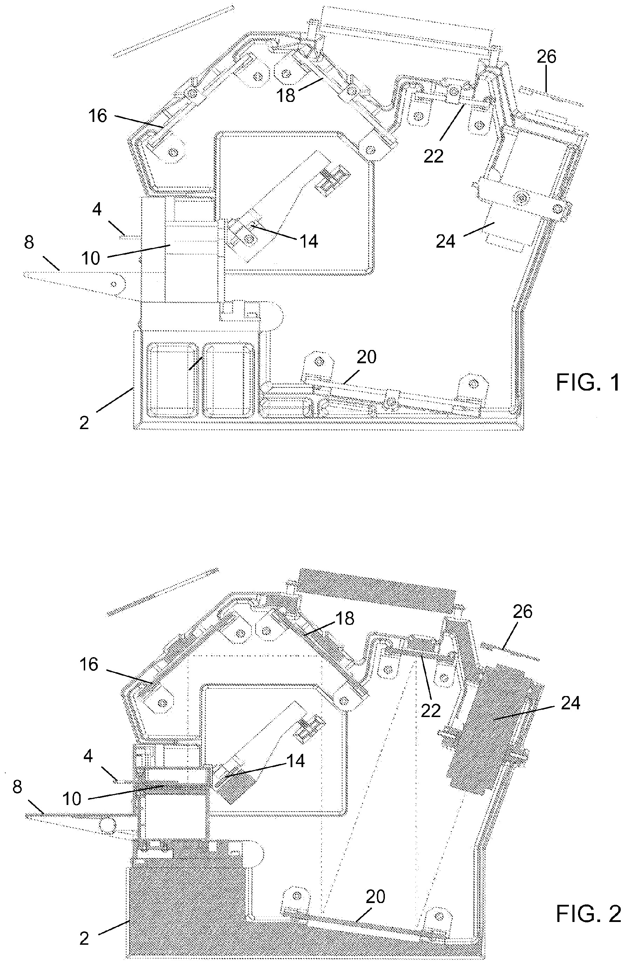

- Figure 1: is a schematic side view of an apparatus according to the invention for reading key profiles,
- Figure 2: is a vertical section therethrough,
- Figure 3: is a perspective view showing in detail the securing of a flat key, of which the notching pattern and profile are to be read,
- Figure 4: shows the image formed in the sensor and comprising the profile and notching pattern of a key, and
- Figure 5: is a perspective view showing in detail the securing of a double bitted key, the notching pattern and profile of which are to be read.

As can be seen from the figures, the apparatus of the invention is contained in a box housing 2 to which access is gained from its front side via a slot for inserting the key 4 to be read, which in the described example is a flat key.

The slot for inserting the key is bounded upperly and lowerly by two LED bars 6, 6', each comprising five LEDs embedded in a parallelepiped mass of light diffusing material, such as silicone or plastic.

Springs (not shown in the drawings) are associated with each of the two bars 6, 6', to maintain the bars in a state of elastic approach.

A mechanical system connected to a lever 8 is also associated with the two bars, to space them apart, against the elastic reaction of the springs associated with them, during the insertion of the key to be read, and such that on releasing the lever 8, the elastic reaction of the springs causes the key 4 to be clamped by the bars.

A support plate 10 for the key is provided within the housing 2, in a position corresponding with the insertion slot for the key 4.

With one side of this plate there are associated a series of aligned LEDs 12, the purpose of which is to illuminate by diffusion the entire thickness of the plate 10 for its entire length.

In a position even more internal than the plate 10 and aligned with the aperture provided in the housing 2, there is a first mirror 14, the purpose of which is to reflect the light rays striking the mirror parallel to the axis of the key 4, onto another mirror 16.

The unit comprising the two bars 6, 6' and the plate 10 is mounted on a structure, which can rotate relative to the housing 2 about a vertical axis, to ensure that the axis of the key 4 to be read, retained by the pair of bars 6, 6', is correctly positioned for its reading, i.e. having its longitudinal axis perfectly perpendicular to the front surface of the housing 2. The angular position of the key 4 is adjusted manually and can be controlled by software, as illustrated during the description of operation of the apparatus.

The second mirror 16 is disposed such as to reflect the image received by the first mirror 14 onto a third mirror 18, itself disposed such as to reflect the image received thereby onto a part of a fourth mirror 20. This is faced by a parallel fifth mirror 22, which receives the image reflected by the fourth mirror 20 and reflects it onto a different part of the mirror, which then reflects it onto a lens 24, behind which an optical sensor 26 is positioned.

This complex of mirrors and multiple reflections means that the image of the key 4 reaches the sensor 26 after passing along a relatively lengthy optical path (at least 60 cm), in order to prevent parallax errors while at the same time limiting the apparatus dimensions.

As an alternative, the illuminated image can be collected on a telecentric lens.

The described apparatus operates in the following manner:
The operator inserts the key 4, of which the profile is to be read, into the front slot of the housing 2, after separating the two LED bars 6, 6' by operating the lever 8.

After inserting the key 4, the lever 8 is released to enable the springs associated with the two LED bars 6, 6' to approach each other and retain the key in the manner of a clamp.

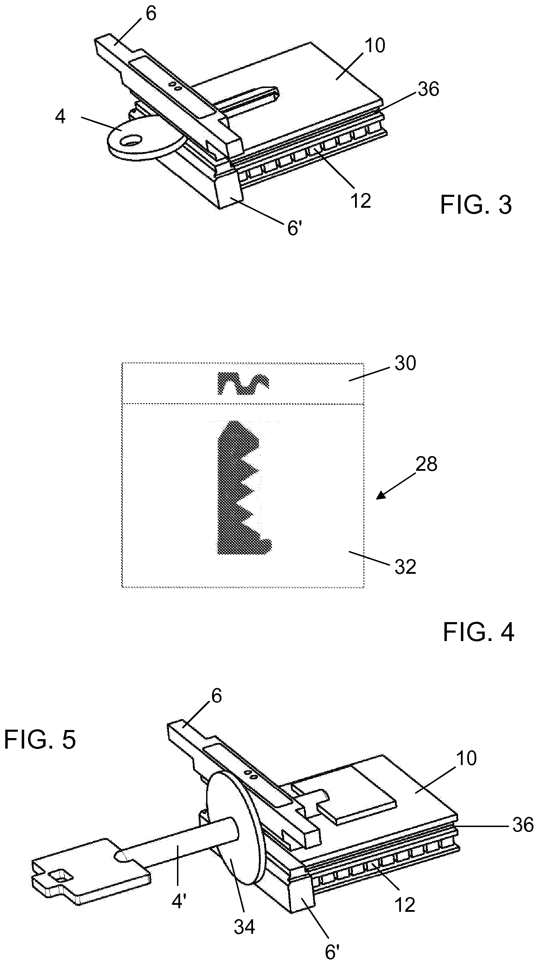

The LEDs are then lit to create about the key 4 a region of diffused light which defines the dark profile of the key on the bright background provided by the diffused light. This image is collected by the mirror 14 and after a series of reflections on the mirrors 16, 18, 20, 22 passes through the lens 24 to be reconstructed on the sensor 26, from which it can then be displayed in traditional manner on the screen 28, on which the image of the profile appears dark on a bright background, as represented by the screen area 30 (see Figure 4).

To achieve a sharp image the invention also uses software able to process the image effectively read by the sensor, to extract therefrom only the key profile.

During this step, as the longitudinal axis of the key may not be perfectly parallel to the optical axis of the system, the unit formed by the two LED bars 6, 6' and by the plate 10 is able to be rotated about a vertical axis to recreate this parallelism. As stated, this rotation is done manually by the operator while viewing the screen 28, and can possibly be controlled by softwa re.

The notching pattern of the key 4 can also be displayed on the same screen.

For this purpose the LEDs of the plate 10 are powered alternately with respect to the LEDs of the bar 6, 6', so that when illuminated, they project onto the second mirror 16 a black image on the white background of the key.

Consequently the image of the key profile, received from the first mirror 14, and the image of the key notching pattern, received from the LED plate 10, are formed simultaneously in the second mirror 16.

For this purpose directional filters 36 are preferably associated with the LED plate 10 to orientate the light emitted by the plate in a direction perpendicular to its surface.

Via multiple reflection, the two side-by-side images then reach the sensor 26 and can be displayed in the two areas 30 and 32 of the screen 28.

The aforegoing description applies to the case of a flat key 4. However the apparatus of the invention is also able to read the profile and notching pattern of a bitted key 4', a double bitted key or a pump key. However in this case, before inserting the key 4' into the slot of the housing 2, the key must be provided with a diffuser screen, consisting of a ring 34 embracing the shank of the key 4' and adhering to the slot when the key is inserted into the slot facing the LED bars 6, 6' at the slot.

In this manner the screen 34 diffuses the light emitted by the LEDs of the two bars 6, 6' and sharpens the contrast between the shape of the key profile and the surrounding area.

Independently of the type of key analysed, after its profile and its notching pattern have been read, the relative data can be used to display the images and also to search in a database for the type of key analysed, and possibly to duplicate it, after which the same apparatus is able to determine whether the duplicated key corresponds to the original key, within the limits of predefined standards.

## Claims

1. A method for reading the profile of a key comprising a head and a shank, comprising:
- illuminating simultaneously the shank of said key (4, 4') from both sides with diffused light sources comprising two LED bars (6, 6') which retain said shank in the manner of a clamp,
- collecting on a sensor (26) an image of the region of a diffused light which defines the dark profile of the key on the bright background provided by said diffused light sources, said image being obtained in this manner in the direction of the longitudinal axis of said shank and at an optical path between said diffused light sources and the sensor that is equal to at least 60 cm and after a series of multiple reflections of said image by a plurality of mirrors (14, 16, 18, 20, 22) interposed between said diffused light sources (6, 6') and the sensor (26) or with a telecentric lens interposed between said diffused light sources (6, 6') and the sensor (26), in order to prevent parallax errors,
- processing via software the image collected on said sensor (26) to extract therefrom only the key profile.

2. A method as claimed in claim 1 for reading the profile of a flat key, **characterised by** illuminating that shank part close to the head of the key (4, 4').

3. A method as claimed in claim 1 for reading the profile of a bitted key, a double bitted key or a pump key, **characterised by** illuminating that key portion different from the head, after interposing a light-coloured diffuser screen (34) between the light source and said head.

4. A method as claimed in claim 1, **characterised by** integrating the reading of the key profile with a reading of the notching pattern of said key, the reading of the notching pattern being effectuated at a time different from the reading of said profile.

5. A method as claimed in claim 4, **characterised by** maintaining fixed the position of the key during both the two profile and notching pattern readings

6. A method as claimed in claim 4, **characterised by** causing the key profile image and the key notching pattern image to reach a single sensor (26) at separate times.

7. A method as claimed in claim 4, **characterised by** causing the two different key profile and key notching pattern images to reach two separate areas of a single sensor.

8. A method as claimed in claim 7, **characterised by** displaying on a screen (28) the image collected by the sensor.

9. An apparatus for implementing the method claimed in one or more of claims from 1 to 8, comprising:
- a diffused light source (6, 6') disposed in correspondence with the shank of the key (4, 4'), said diffused light source comprises a pair of LED bars (6, 6') that are disposed on both sides of the key (4, 4') to illuminate and that retain said shank in the manner of a clamp; and
- a sensor (26) with its optical axis substantially parallel to the longitudinal axis of said shank,
- the optical path between said diffuse light source (6, 6') and said sensor (26) is equal to at least 60 cm and a plurality of mirrors (14, 16, 18, 20, 22) or a telecentric lens are interposed between said diffused light sources (6, 6') and said sensor (26),
- a software associated with said sensor (26) to extract from the image formed thereon only that part concerning the key profile.

10. An apparatus as claimed in claim 9, **characterised in that** with the LED bars (6, 6') there are associated elastic means acting in the sense of maintaining each bar elastically urged towards the other bar such as to retain the interposed shank of said key (4, 4') in the manner of a clamp.

11. An apparatus as claimed in claim 10, **characterised by** comprising a lever device (8) acting in the sense of spacing said LED bars (6, 6') apart against the elastic reaction of the elastic means associated with them, during the insertion of the key to be analysed (4, 4') between said bars (6, 6').

12. An apparatus as claimed in claim 9, **characterised in that** said diffused light sources (6, 6') are mounted on a structure able to rotate about an axis perpendicular to the longitudinal axis of said shank.

13. An apparatus as claimed in claim 9, **characterised by** comprising a further diffused light source (10) and a sensor with its optical axis substantially perpendicular to the axis of the shank of the key (4, 4').

14. An apparatus as claimed in claim 13, **characterised in that** said further diffused light source (10) consists of an LED plate (10) on which said key (4, 4') is rested.

15. An apparatus as claimed in claim 14, **characterised in that** said further diffused light source consists of a plate (10) of light diffuser material and a plurality of LEDs (12) facing the thickness of said plate along one of its sides.

16. An apparatus as claimed in claim 14, **characterised in that** directional filters (36) are associated with the LED plate which act in the sense of orientating the light from the LEDs diffused by said plate (10) in a direction perpendicular to the plate.

17. An apparatus as claimed in claim 13, **characterised by** comprising means for alternately powering said diffused light sources (6, 6') and said further diffused light source (10).

18. An apparatus as claimed in claim 17, **characterised by** comprising a single sensor (26), on which the images of the profile and notching pattern of said key (4, 4') form, one of said images being reflected onto the sensor (26) by a mirror (14).

19. An apparatus as claimed in claim 18, **characterised in that** the software is associated with said sensor (26) to extract from the image formed thereon that part concerning its notching pattern.

20. An apparatus as claimed in claim 9, **characterised in that** a screen (28) is associated with the sensor (26) to display the image.

21. An apparatus as claimed in claim 20, **characterised in that** said screen (28) is divided into two regions (30, 32) in which the images of the profile and notching pattern of the key (4, 4') form.

22. An apparatus as claimed in claim 9 for reading bitted keys, double bitted keys and pump keys, **characterised by** comprising a light-coloured diffuser screen (34), to be applied between said diffused light sources (6, 6') and the head of said key (4, 4').

## Patentansprüche

1. Verfahren zum Lesen des Profils eines Schlüssels, umfassend einen Kopf und einen Schaft, umfassend:
- gleichzeitiges Beleuchten des Schafts des Schlüssels (4, 4') von beiden Seiten mit diffundierten Lichtquellen, umfassend zwei LED-Leisten (6, 6'), die den Schaft in der Weise einer Klemme halten,
- Erfassen, auf einem Sensor (26), eines Bilds des Bereichs eines diffundierten Lichts, das das dunkle Profil des Schlüssels auf dem hellen Hintergrund, das durch die diffundierten Lichtquellen bereitgestellt wird, definiert, wobei das Bild auf diese Weise in der Richtung der Längsachse des Schafts und auf einem optischen Pfad zwischen den diffundierten Lichtquellen und dem Sensor, der gleich mindestens 60 cm ist, und nach einer Reihe von mehreren Reflexionen des Bilds durch eine Vielzahl von Spiegeln (14, 16, 18, 20, 22), die zwischen den diffundierten Lichtquellen (6, 6') und dem Sensor (26) eingeschoben sind, oder mit einem telezentrischen Objektiv, das zwischen den diffundierten Lichtquellen (6, 6') und dem Sensor (26) eingeschoben ist, um Parallaxenfehler zu verhindern, erhalten wird,
- Verarbeiten, über Software, des Bilds, das auf dem Sensor (26) erfasst wird, um daraus nur das Schlüsselprofil zu extrahieren.

2. Verfahren nach Anspruch 1 zum Lesen des Profils eines Flachschlüssels, **gekennzeichnet durch** ein Beleuchten des Schaftteils in der Nähe des Kopfs des Schlüssels (4, 4').

3. Verfahren nach Anspruch 1 zum Lesen des Profils eines Bartschlüssels, eines Doppelbartschlüssels oder eines Pumpenschlüssels, **gekennzeichnet durch** ein Beleuchten dieses Schlüsselabschnitts verschieden von dem Kopf, nachdem ein hellfarbiger Diffusorschirm (34) zwischen der Lichtquelle und dem Kopf eingeschoben wurde.

4. Verfahren nach Anspruch 1, **gekennzeichnet durch** ein Verbinden des Lesens des Schlüsselprofils mit einem Lesen des Kerbmusters des Schlüssels, wobei das Lesen des Kerbmusters zu einem anderen Zeitpunkt als dem des Lesens des Profils bewirkt wird.

5. Verfahren nach Anspruch 4, **gekennzeichnet durch** ein Halten in fester Position des Schlüssels während der beiden Vorgänge des Profil- und Kerbmusterlesens

6. Verfahren nach Anspruch 4, **gekennzeichnet durch** ein Bewirken, dass das Schlüsselprofilbild und das Schlüsselkerbmusterbild einen einzigen Sensor (26) zu getrennten Zeitpunkten erreichen.

7. Verfahren nach Anspruch 4, **gekennzeichnet durch** ein Bewirken, dass die beiden verschiedenen Schlüsselprofil- und Schlüsselkerbmusterbilder zwei separate Bereiche eines einzigen Sensors erreichen.

8. Verfahren nach Anspruch 7, **gekennzeichnet durch** ein Anzeigen, auf einem Bildschirm (28), des von dem Sensor erfassten Bilds.

9. Vorrichtung zum Implementieren des Verfahrens nach einem oder mehreren der Ansprüche 1 bis 8, umfassend:
- eine diffundierte Lichtquelle (6, 6'), die in Übereinstimmung mit dem Schaft des Schlüssels (4, 4') angeordnet ist, wobei die diffundierte Lichtquelle ein Paar LED-Leisten (6, 6') umfasst, die auf beiden Seiten des zu beleuchtenden Schlüssels (4, 4') angeordnet sind und die den Schaft in der Weise einer Klemme halten; und
- einen Sensor (26), dessen optische Achse im Wesentlichen parallel zu der Längsachse des Schafts ist,
- wobei der optische Pfad zwischen der diffusen Lichtquelle (6, 6') und dem Sensor (26) gleich mindestens 60 cm ist und eine Vielzahl von Spiegeln (14, 16, 18, 20, 22) oder ein telezentrisches Objektiv zwischen den diffundierten Lichtquellen (6, 6') und dem Sensor (26) eingeschoben sind,
- eine Software, die mit dem Sensor (26) verbunden ist, um aus dem darauf gebildeten Bild nur den Teil zu extrahieren, der das Schlüsselprofil betrifft.

10. Vorrichtung nach Anspruch 9, **dadurch gekennzeichnet, dass** mit den LED-Leisten (6, 6') elastische Mittel verbunden sind, die in dem Sinne wirken, dass jede Leiste elastisch in Richtung der anderen Leiste gezwängt gehalten wird, um den eingeschobenen Schaft des Schlüssels (4, 4') in der Weise einer Klemme zu halten.

11. Vorrichtung nach Anspruch 10, **dadurch gekennzeichnet, dass** sie eine Hebeleinrichtung (8) umfasst, die in dem Sinne wirkt, dass die LED-Leisten (6, 6'), während der Einführung des zu analysierenden Schlüssels (4, 4') zwischen den Leisten (6, 6'), gegen die elastische Reaktion der mit ihnen verbundenen elastischen Mittel beabstandet gehalten werden.

12. Vorrichtung nach Anspruch 9, **dadurch gekennzeichnet, dass** die diffundierten Lichtquellen (6, 6') auf einer Struktur angebracht sind, die dazu in der Lage ist, sich um eine Achse senkrecht zu der Längsachse des Schafts zu drehen.

13. Vorrichtung nach Anspruch 9, **dadurch gekennzeichnet, dass** sie eine weitere diffundierte Lichtquelle (10) und einen Sensor, dessen optische Achse im Wesentlichen senkrecht zu der Achse des Schafts des Schlüssels (4, 4') ist, umfasst.

14. Vorrichtung nach Anspruch 13, **dadurch gekennzeichnet, dass** die weitere diffundierte Lichtquelle (10) aus einer LED-Platte (10) besteht, auf der der Schlüssel (4, 4') aufliegt.

15. Vorrichtung nach Anspruch 14, **dadurch gekennzeichnet, dass** die weitere diffundierte Lichtquelle aus einer Platte (10) aus Lichtdiffusormaterial und einer Vielzahl von LEDs (12), die der Dicke der Platte entlang einer ihrer Seiten zugewandt sind, besteht.

16. Vorrichtung nach Anspruch 14, **dadurch gekennzeichnet, dass** Richtungsfilter (36) mit der LED-Platte verbunden sind, die in dem Sinne wirken, dass das durch die Platte (10) diffundierte Licht von den LEDs in einer Richtung senkrecht zu der Platte ausgerichtet wird.

17. Vorrichtung nach Anspruch 13, **dadurch gekennzeichnet, dass** sie ein Mittel zum abwechselnden Speisen der diffundierten Lichtquellen (6, 6') und der weiteren diffundierten Lichtquelle (10) umfasst.

18. Vorrichtung nach Anspruch 17, **dadurch gekennzeichnet, dass** sie einen einzigen Sensor (26) umfasst, auf dem die Bilder des Profils und des Kerbmusters des Schlüssels (4, 4') gebildet werden, wobei eines der Bilder durch einen Spiegel (14) auf den Sensor (26) reflektiert wird.

19. Vorrichtung nach Anspruch 18, **dadurch gekennzeichnet, dass** die Software mit dem Sensor (26) verbunden ist, um aus dem darauf gebildeten Bild den Teil zu extrahieren, der dessen Kerbmuster betrifft.

20. Vorrichtung nach Anspruch 9, **dadurch gekennzeichnet, dass** ein Bildschirm (28) mit dem Sensor (26) verbunden ist, um das Bild anzuzeigen.

21. Vorrichtung nach Anspruch 20, **dadurch gekennzeichnet, dass** der Bildschirm (28) in zwei Bereiche (30, 32) geteilt ist, in denen die Bilder des Profils und des Kerbmusters des Schlüssels (4, 4') gebildet werden.

22. Vorrichtung nach Anspruch 9 zum Lesen von Bartschlüsseln, Doppelbartschlüsseln und Pumpenschlüsseln, **dadurch gekennzeichnet, dass** sie einen hellfarbigen Diffusorschirm (34) umfasst, der zwischen den diffundierten Lichtquellen (6, 6') und dem Kopf des Schlüssels (4, 4') anzubringen ist.

## Revendications

1. Procédé de lecture du profil d'une clé comprenant une tête et une tige, comprenant les étapes suivantes :
- éclairer simultanément la tige de ladite clé (4, 4') avec des sources lumineuses diffuses comprenant deux barres à LED (6, 6') qui retiennent ladite tige à la manière d'une pince,
- collecter sur un capteur (26) une image de la région d'une lumière diffuse qui définit le profil sombre de la clé sur le fond lumineux fourni par lesdites sources de lumière diffusée, l'image étant ainsi obtenue dans la direction de l'axe longitudinal de ladite tige et au niveau d'un chemin optique entre lesdites sources lumineuses diffusées et le capteur égal à au moins 60 cm et après une série de réflexions multiples de ladite image par une pluralité de de miroirs (14, 16, 18, 20, 22) interposés entre lesdites sources de lumière diffusée (6, 6') et le capteur (26) ou avec un objectif télécentrique interposés entre lesdites sources de lumière diffusée (6, 6') et le capteur (26), pour éviter les erreurs de parallaxe,
- traiter par logiciel l'image recueillie sur ledit capteur (26) pour n'en extraire que le profil de clé.

2. Procédé selon la revendication 1 pour lire le profil d'une clé plate, **caractérisé en ce qu'**on éclaire cette partie de tige qui est près de la tête de la clé (4, 4').

3. Procédé selon la revendication 1 pour lire le profil d'une clé méchée, d'une clé à double méchage ou d'une clé à pompe, **caractérisé par** l'éclairage de cette partie de clé différente de la tête, après interposition d'un écran diffuseur de couleur claire (34) entre la source de lumière et ladite tête.

4. Procédé selon la revendication 1, **caractérisé par** l'intégration de la lecture du profil de clé à une lecture du motif de gravure de ladite clé, la lecture du motif de gravure étant effectuée à un moment différent de celui de la lecture dudit profil.

5. Procédé selon la revendication 4, **caractérisé par** le maintien fixe de la position de la clé pendant les deux lectures de profil et de motif de gravure.

6. Procédé selon la revendication 4, **caractérisé en ce que** l'on génère l'image du profil de clé et l'image du motif de gravure de la clé pour atteindre un seul capteur (26) à des moments différents.

7. Procédé selon la revendication 4, **caractérisé en ce que** les images de deux profils de clé et de motifs de gravure de clé différents atteignent deux zones distinctes d'un même capteur.

8. Procédé selon la revendication 7, **caractérisé par** l'affichage sur un écran (28) de l'image collectée par le capteur.

9. Appareil pour la mise en œuvre du procédé selon l'une ou plusieurs des revendications 1 à 8, comprenant :
- une source de lumière diffuse (6, 6') disposée en correspondance avec la tige de la clé (4, 4'), une source de lumière diffusée comprenant une paire de barres à LED (6, 6') qui sont disposées des deux côtés de la clé (4, 4') pour éclairer et qui retiennent ladite tige à la manière d'une pince ; et
- un capteur (26) ayant son axe optique substantiellement parallèle à l'axe longitudinal de ladite tige,
- le chemin optique entre ladite source de lumière diffuse (6, 6') et ledit capteur (26) étant égal à au moins 60 cm et une pluralité de miroirs (14, 16, 18, 20, 22) ou d'un objectif télécentrique sont interposés entre lesdites sources de lumière diffusée (6, 6') et ledit capteur (26),
- un logiciel associé au dit capteur (26) pour extraire de l'image formée sur celle-ci uniquement la partie concernant le profil de clé.

10. Appareil selon la revendication 9, **caractérisé en ce que** des moyens élastiques sont associés aux barres de LED (6, 6'), agissant dans le sens où chaque barre est sollicitée élastiquement vers l'autre barre, de manière à retenir la tige interposée de ladite clé (4, 4') à la manière d'une pince.

11. Appareil selon la revendication 10, **caractérisé en ce qu'**il comprend un dispositif à levier (8) agissant dans le sens d'un espacement desdites barres de LED (6, 6') contre la réaction élastique des moyens élastiques qui leur sont associés, lors de l'insertion de la clé à analyser (4, 4') entre lesdites barres (6, 6').

12. Appareil selon la revendication 9, **caractérisé en ce que** lesdites sources de lumière diffusée (6, 6') sont montées sur une structure capable de tourner autour d'un axe perpendiculaire à l'axe longitudinal de ladite tige.

13. Appareil selon la revendication 9, **caractérisé en ce qu'**il comprend une autre source de lumière diffusée (10) et un capteur dont l'axe optique est substantiellement perpendiculaire à l'axe de la tige de la clé (4, 4').

14. Appareil selon la revendication 13, **caractérisé en ce que** ladite source de lumière diffusée supplémentaire (10) consiste en une plaque de LED (10) sur laquelle est appuyée ladite clé (4, 4').

15. Appareil selon la revendication 14, **caractérisé en ce que** ladite source de lumière diffusée supplémentaire est constituée d'une plaque (10) en matériel diffuseur de lumière et d'une pluralité de LED (12) faisant face à l'épaisseur de ladite plaque le long de l'un de ses côtés.

16. Appareil selon la revendication 14, **caractérisé en ce que** des filtres directionnels (36) sont associés à la plaque de LED qui agissent dans le sens d'orienter la lumière des LED émises par ladite plaque (10) dans une direction perpendiculaire à la plaque.

17. Appareil selon la revendication 13, **caractérisé en ce qu'**il comprend des moyens pour alimenter en alternance lesdites sources de lumière diffusée (6, 6') et ladite autre source de lumière diffusée (10).

18. Appareil selon la revendication 17, **caractérisé en ce qu'**il comprend un seul capteur (26) sur lequel se forment les images du profil et du motif de gravure de ladite clé (4, 4'), une desdites images étant réfléchie sur le capteur (26) par un miroir (14).

19. Appareil selon la revendication 18, **caractérisé en ce que** le logiciel est associé audit capteur (26) pour extraire de l'image formée sur celle-ci la partie concernant son motif de gravure.

20. Appareil selon la revendication 9, **caractérisé en ce qu'**un écran (28) est associé au capteur (26) pour afficher l'image.

21. Appareil selon la revendication 20, **caractérisé en ce que** ledit écran (28) est divisé en deux régions (30, 32) dans lesquelles se forment les images du profil et le motif de gravure de la clé (4, 4').

22. Appareil selon la revendication 9, pour lire des clés à deux pans, des clés à double bites et des clés de pompe, **caractérisé en ce qu'**il comprend un écran diffuseur de couleur claire (34), à appliquer entre lesdites sources de lumière diffusée (6, 6') et la tête de ladite clé (4, 4').
